# EUROPEAN PATENT APPLICATION

(11) **EP 4 657 736 A1**
(43) Date of publication of application: **03.12.2025**
(21) Application number: 24178339.8
(22) Date of filing: 28.05.2024
(51) Int. Cl.: H02M 1/42, H05B 45/355, H05B 45/382

(54) **CONVERTER FOR SUPPLYING AN LED-BASED LOAD AND SYSTEM COMPRISING THE LATTER**

(71) Applicant: Tridonic GmbH & Co. KG, 6851 Dornbirn (AT)
(72) Inventor: Ramezan Ghanbari, Dr., Alireza, 6850 Dornbirn (AT)
(74) Representative: Rupp, Christian

(57) **Abstract**

A converter (10) for supplying an LED-based load (21) is provided. Said converter (10) comprises an LLC circuit (13), comprising a half-bridge (14a) with two switches (16a, 16b), with a coupled inductor (15a) connected between the midpoint of the two switches (16a, 16b) of the half-bridge (14a) and the midpoint of two LLC DC input capacitors (17a, 17b), a rectifier (12) supplied with an AC voltage (11) and supplying the DC input capacitors (17a, 17b), an EMI input choke (18) on the AC side of the rectifier (12). In this context, the converter (10) is free of a PFC inductor, especially a dedicated PFC inductor, between the rectifier (12) and the DC input capacitors (17a, 17b).

## Description

The invention relates to a converter for supplying an LED-based load, and a system comprising such a converter and an LED-based load supplied by said converter.

Generally, in times of an increasing usage of LEDs, especially for lighting purposes, there is a growing need of converters for supplying such LEDs in a particularly efficient and reliable manner.

Accordingly, there is an object to provide a converter for supplying an LED-based load, and a system comprising such a converter and an LED-based load supplied by said converter, wherein a particularly high efficiency and reliability are ensured, especially in the sense of cost-effectively achieving a low THD and a high power factor.

This object is solved by the features of claim 1 for a converter for supplying an LED-based load and the features of claim 4 for a system comprising such a converter and an LED-based load supplied by said converter. The dependent claims contain further developments.

According to a first aspect of the invention, a converter for supplying an LED-based load is provided. Said converter comprises an LLC circuit, comprising a half-bridge with two switches, with a coupled inductor connected between the midpoint of the two switches of the half-bridge and the midpoint of two LLC DC input capacitors, a rectifier supplied with an AC voltage and supplying the DC input capacitors, and an EMI (electromagnetic interference) input choke on the AC side of the rectifier. In this context, the converter is free of a PFC (power factor correction) inductor, especially a dedicated PFC inductor, between the rectifier and the DC input capacitors. Advantageously, this allows for cost-effectively achieving a low THD and a high power factor. Further advantageously, it is noted that PFC functionality can be integrated in the EMI stage.

Further advantageously, the EMI input choke especially functions as the integrated PFC inductor, wherein the leakage inductor of the EMI input choke is designed to meet the necessary inductor requirements for PFC operation.

According to an implementation form of the first aspect of the invention, the converter further comprises a differential mode capacitor. In addition to this or as an alternative, the converter further comprises two common mode capacitors.

According to a further implementation form of the first aspect of the invention, the coupled inductor is magnetically coupled with two inductors, one in each supply path of the AC voltage to the rectifier. Additionally or alternatively, the converter has no switch in the DC stage between the rectifier and the half-bridge. Advantageously, for instance, by only actively switching the two switches of the half-bridge, power factor correction functionality can further be optimized in an efficient manner.

According to a further implementation form of the first aspect of the invention, the converter has a THD (total harmonic distortion) of 8 per cent, preferably 4 per cent, more preferably 3 per cent, most preferably 2 per cent, at maximum. Additionally or alternatively, the converter has an efficiency of at least 75 per cent, preferably 78 per cent, more preferably 85 per cent, most preferably 87 per cent. Further additionally or further alternatively, the converter has a power factor of at least 0.980, preferably 0.985, more preferably 0.990, most preferably 0.994. Advantageously, for example, for a converter output power of 60 watts, the converter has a THD of 2 per cent at maximum, an efficiency of at least 87 per cent, and a power factor of at least 0.994.

According to a second aspect of the invention, a system is provided. Said system comprises a converter according to the first aspect of the invention or any of its implementation forms, respectively, and an LED-based load supplied by said converter. Advantageously, this allows for cost-effectively achieving a low THD and a high power factor. Further advantageously, it is noted that PFC functionality can be integrated in the EMI stage.

Exemplary embodiments of the invention are now further explained with respect to the drawings by way of example only, and not for limitation. In the drawings:

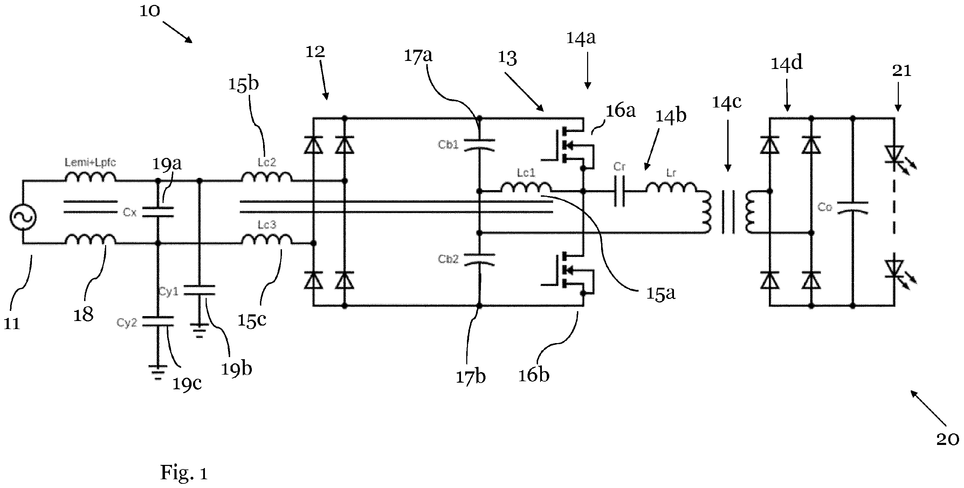

- Fig. 1: shows an exemplary embodiment of an inventive converter in combination with a system comprising the latter and an LED-based load supplied thereby.

With respect to Fig. 1, a circuit diagram of an exemplary embodiment of a converter 10 for supplying an LED-based load 21 is illustrated.

For the sake of completeness, it is noted that said Fig. 1 also depicts an exemplary embodiment of a system 20 comprising said converter 10 and said LED-based load 21 supplied by the converter 10.

In accordance with Fig. 1, the converter 10 comprises an LLC circuit 13, said LLC circuit 13 comprising a half-bridge 14a with two switches 16a, 16b, said LLC circuit 13 with a coupled inductor 15a connected between the midpoint of the two switches 16a, 16b of the half-bridge 14a and the midpoint of two LLC DC input capacitors 17a, 17b, a rectifier 12 supplied with an AC voltage 11 and supplying the DC input capacitors 17a, 17b, and an EMI input choke 18 on the AC side of the rectifier 12, wherein the converter 10 is free of a PFC inductor between the rectifier 12, a differential mode capacitor 19a, two common mode capacitors 19b, 19c and the DC input capacitors 17a, 17b.

Advantageously, the corresponding inductors of the EMI choke 18 provide power factor correction functionality, especially in addition to the corresponding EMI filter function.

Further advantageously, with respect to the EMI choke, capacitors 19a, 19b and 19c contribute to electromagnetic compatibility for the converter 10.

Exemplarily, with respect to the coupled inductor 15a, it is noted that said coupled inductor 15a is magnetically coupled with two inductors 15b, 15c, one in each supply path of the AC voltage 11 to the rectifier 12.

With respect to the DC input capacitors 17a, 17b, it is noted that said two capacitors 17a, 17b are exemplarily arranged in parallel on the supply side of the half-bridge 14a.

With respect to the LLC circuit 13, it is noted that said LLC circuit 13 does exemplarily not only comprise said half-bridge 14a and said coupled inductor 15a but also a resonant tank 14b, a transformer 14c, and an output rectifier 14d.

As it can further be seen from Fig. 1, the converter 10 has exemplarily no switch in the corresponding DC stage between the rectifier 12 and the half-bridge 14a.

Accordingly, the converter 10 may especially be seen as an LLC converter with integrated PFC (power factor correction) function.

In this context, the term "integrated" may especially be understood in a manner that there are no switches, especially no PFC switches, in addition to the two half-bridge switches 16a, 16b required by the LLC topology.

Advantageously, the PFC functionality can further be optimized by only actively switching the two half-bridge switches 16a, 16b of the LLC circuit 13.

In order to achieve a particularly low THD in a high power factor, especially in addition to the above-mentioned integration of PFC functionality in the EMI stage, a coupled inductor or the above-mentioned coupled inductor 15a, respectively is used. As already mentioned in other words above, the coupled inductor 15a, especially of a corresponding transformer, is connected between the midpoint of the half-bridge 14a of the LLC circuit 13 and the midpoint of the two capacitors 17a, 17b, which may especially be understood as split or share, respectively, buffer capacitors. Exemplarily, these capacitors 17a, 17b are the input or "DC link" capacitors, respectively, of the LLC circuit 13.

With respect to the coupled inductor 15a, it is further noted that said coupled inductor 15a exemplarily shares the same core with the above-mentioned two inductors 15b and 15c. Said inductors 15b, 15c are respectively connected in each of the AC side supply paths before the rectifier 12 of the converter. Advantageously, especially via this inductor coupling, the PFC functionality can further be optimized.

With respect to the switches 16a, 16b of the half-bridge 14a of the LLC circuit 13, it is noted that each of said switches 16a, 16b exemplarily comprises or is an n-channel enhancement-type field-effect transistor.

Furthermore, with respect to the rectifier 12, it is noted that said rectifier 12 exemplarily comprises four diodes.

Moreover, with respect to the output rectifier 14d, it is noted that said output rectifier 14d exemplarily comprises four diodes.

It is further noted that it might be particularly advantageous if the converter 10 has a THD of 8 per cent, preferably 4 per cent, more preferably 3 per cent, most preferably 2 per cent, at maximum, and/or an efficiency of at least 75 per cent, preferably 78 per cent, more preferably 85 per cent, most preferably 87 per cent, and/or a power factor of at least 0.980, preferably 0.985, more preferably 0.990, most preferably 0.994.

For instance, for an output power of the converter 10 of 60 watts, the converter 10 has a THD of 2 per cent at maximum, an efficiency of at least 87 per cent, and a power factor of at least 0.994.

Finally, it is noted that it might be particularly advantageous if one or any combination of the following applies:
- the AC voltage 11 comprises or is sinusoidal voltage;
- the capacitors 17a, 17b have the same value or substantially the same value;
- one or each of the capacitors 17a, 17b has a value of 22 microfarad or substantially of 22 microfarad;
- the inductors 15b, 15c have the same value or substantially the same value;
- one or each of the inductors 15b, 15c has a value of 1400 microhenry or substantially of 1400 microhenry;
- the value of the coupled inductor 15a has a value of 700 microhenry or substantially of 700 microhenry;
- the corresponding resonant inductor of the resonant tank 14b has a value of 400 microhenry or substantially of 400 microhenry;
- the corresponding magnetizing inductor of the resonant tank 14b has a value of 2100 microhenry or substantially of 2100 microhenry;
- the corresponding resonant capacitor of the resonant tank 14b has a value of 3.3 nanofarad or substantially of 3.3 nanofarad;
- the corresponding primary equivalent load with respect to the resonant tank has a value of 780 ohm or substantially of 780 ohm;
- the corresponding quality factor with respect to the resonant tank 14b has a value of 0.4 or substantially of 0.4;
- the corresponding first resonant frequency with respect to the resonant tank 14b has a value of 55 kilohertz or substantially of 55 kilohertz;
- the corresponding second resonant frequency with respect to the resonant tank 14b has a value of 140 kilohertz or substantially of 140 kilohertz;
- the corresponding switching frequency range is or substantially is 55 kilohertz to 140 kilohertz.
- the corresponding EMI choke 18 has a value of 65 millihenry or substantially of 65 millihenry;
- the leakage inductor of corresponding EMI choke 18 has a value of 800 microhenry or substantially of 800 microhenry, utilized as the PFC inductor;
- the EMI capacitors 19a, 19b and 19c have a value of 330 microfarad, 1 nanofarad and 1 nanofarad or substantially of 330 microfarad, 1 nanofarad and 1 nanofarad.

With respect to the above-mentioned term "substantially", it is noted that said term may especially be understood as a corresponding deviation of not more than 20 per cent, preferably not more than 10 per cent, more preferably not more than 5 per cent, most preferably not more than 1 per cent.

While various embodiments of the present invention have been described above, it should be understood that they have been presented by way of example only, and not limitation.

Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A converter (10) for supplying an LED-based load (21), comprising:
- an LLC circuit (13), comprising a half-bridge (14a) with two switches (16a, 16b), with a coupled inductor (15a) connected between the midpoint of the two switches (16a, 16b) of the half-bridge (14a) and the midpoint of two LLC DC input capacitors (17a, 17b),
- a rectifier (12) supplied with an AC voltage (11) and supplying the DC input capacitors (17a, 17b), and
- an EMI input choke (18) on the AC side of the rectifier (12),
wherein the converter (10) is free of a PFC inductor, especially a dedicated PFC inductor, between the rectifier (12) and the DC input capacitors (17a, 17b).

2. The converter (10) according to claim 1, further comprising:
- a differential mode capacitor (19a), and/or
- two common mode capacitors (19b, 19c).

3. The converter (10) according to claim 1 or 2,
wherein the coupled inductor (15a) is magnetically coupled with two inductors (15b, 15c), one in each supply path of the AC voltage (11) to the rectifier (12), and/or
wherein the converter (10) has no switch in the DC stage between said rectifier (12) and the half-bridge (14a).

4. The converter (10) according to any of the claims 1 to 3,
wherein the converter (10) has a THD of 8 per cent, preferably 4 per cent, more preferably 3 per cent, most preferably 2 per cent, at maximum, and/or
wherein the converter (10) has an efficiency of at least 75 per cent, preferably 78 per cent, more preferably 85 per cent, most preferably 87 per cent, and/or
wherein the converter (10) has a power factor of at least 0.980, preferably 0.985, more preferably 0.990, most preferably 0.994.

5. A system (20) comprising:
a converter (10) according to any of the claims 1 to 4, and
an LED-based load (21) supplied by said converter (10).
